# EUROPEAN PATENT APPLICATION

(11) **EP 4 060 473 A1**
(43) Date of publication of application: **21.09.2022**
(21) Application number: 20904681.2
(22) Date of filing: 27.12.2020
(51) Int. Cl.: G06F 3/06

(54) **MEMORY SETTING METHOD AND APPARATUS**

(30) Priority: 26.12.2019 CN 201911369136
(71) Applicant: Huawei Technologies Co., Ltd., Shenzhen, Guangdong 518129 (CN)
(72) Inventor: YAN, Xueguo, Shenzhen, Guangdong 518129 (CN); FENG, Yubo, Shenzhen, Guangdong 518129 (CN); TAN, Haibo, Shenzhen, Guangdong 518129 (CN); CHEN, Xiaoyu, Shenzhen, Guangdong 518129 (CN); DONG, Weiwei, Shenzhen, Guangdong 518129 (CN)
(74) Representative: Goddar, Heinz J.
(86) International application number: PCT/CN2020/139781
(87) International publication number: WO 2021/129847

(57) **Abstract**

A memory setting method and apparatus are provided, so as to allocate a local memory to a node when memories with different performance are intermixed. A processor sets a local memory and a remote memory based on performance of memories of the processor, and sets a memory with better performance as the local memory, so that the processor can preferably gain access to the memory with better performance. This improves efficiency of reading/writing data from/to the local memory by the processor, and improves performance of an entire system.

## Description

### CROSS-REFERENCE TO RELATED APPLICATIONS

This application claims priority to Chinese Patent Application No. 201911369136.9, filed with China National Intellectual Property Administration on December 26, 2019 and entitled "MEMORY SETTING METHOD AND APPARATUS", which is incorporated herein by reference in its entirety.

### TECHNICAL FIELD

This application relates to the field of storage technologies, and in particular, to a memory setting method and apparatus.

### BACKGROUND

A non-uniform memory access architecture (non-uniform memory access architecture, NUMA) is a computer architecture for a plurality of processors. Each processor in a computing device with a NUMA structure is equipped with a memory, and the processor may gain access to a memory of another processor in addition to gaining access to the memory equipped for the processor. When being started, the computing device sets, based on distances between memories and the processor in the computing device, a memory closest to the processor (namely, the memory equipped for the processor) as a local memory, and a memory far away from the processor (for example, the memory of another processor) as a remote memory. In an existing NUMA, because a local memory is close to a processor and has a high access speed, the local memory is set to be preferably gained access to, to improve a data access rate.

However, when a computing device includes memories having different performance, if the memory having poor performance but close to the processor is set as the local memory, the access rate of the processor may not be increased.

### SUMMARY

This application provides a memory setting method and apparatus, so as to allocate a local memory to a node when memories with different performance are intermixed.

According to a first aspect, this application provides a memory setting method. The method is performed by a processor in a NUMA system. The processor includes at least two memories. The method includes: When the processor is started, the processor may first obtain performance of the at least two memories. For example, the processor may read information detected by an SPD to obtain the performance of the at least two memories. Then, the processor sets a local memory and a remote memory based on the performance of the at least two memories, where performance of the local memory may be better than performance of the remote memory. For example, the processor may select at least one memory with best performance from the at least two memories as the local memory, and set a remaining memory of the at least two memories as the local memory.

In the method, the processor sets the local memory and the remote memory based on the performance of memories of the processor, and sets the memory with better performance as the local memory, so that the processor can preferably gain access to the memory with better performance. This improves efficiency of reading/writing data from/to the local memory by the processor, and improves performance of an entire system.

In a possible implementation, after setting the local memory and the remote memory, the processor may further migrate data. The processor may migrate data with the highest data read/write frequency from the remote memory to the local memory. For example, the processor may migrate all data in the remote memory whose data read/write frequencies are higher than a first preset value (for example, the first preset value is a target data read/write frequency in embodiments of this application) to the local memory. The processor may also migrate some data whose data read/write frequencies are equal to the first preset value to the local memory.

In the method, the data with the highest data read/write frequency is stored in the local memory, so that the processor can efficiently obtain the data from the local memory.

In a possible implementation, the first preset value may be an empirical value, or may be determined by the processor based on a data read/write frequency of each memory page in the memories of the processor.

For example, the processor may determine that first N memory pages of memory pages that are arranged in descending order of data read/write frequencies in the at least two memories of the processor are memory pages that need to be stored in the local memory, and a data read/write frequency of an N^{th} memory page may be used as the first preset value.

For another example, the processor may divide priorities for memory pages in the memories based on the data read/write frequencies of the memory pages in the memories. Each priority corresponds to a data read/write frequency range, and different priorities correspond to different data read/write frequency ranges. The first N memory pages of the memory pages arranged in descending order of priorities in the memories are determined as the memory pages that need to be stored in the local memory. The data read/write frequency of an N^{th} memory page is the first preset value.

In the method, the first preset value is set flexibly, and the first preset value determined based on the data read/write frequency of each memory page in the memories of the processor is more accurate, so that some data with the highest data read/write frequencies in the remote memory can be subsequently migrated to the local memory.

In a possible implementation, the processor may further determine a quantity N of memory pages that need to be stored in the local memory. A determining manner is as follows: The processor may separately determine quantities of memory pages in the local memory and the remote memory whose data read/write frequencies are greater than a second preset value (for example, the second preset value is a threshold in embodiments of this application), and then, determine a proportion of the quantity of the memory pages whose data read/write frequencies are greater than the second preset value in the local memory to a quantity of memory pages whose data read/write frequencies are greater than the second preset value in the memories. A product of the proportion and a total quantity of used memory pages in the memories may be used as the quantity N.

In the method, the quantity N determined based on the product of the proportion and the total quantity of the used memory pages in the memories is the quantity of memory pages that are currently allowed to be stored in the local memory and with the highest data read/write frequencies, and is an upper limit. After data is migrated based on the quantity N, it can be ensured that a distribution proportion of quantities of the memory pages whose data read/write frequencies are greater than the second preset value in the local memory and in the remote memory remains unchanged. However, the memory pages that are stored in the local memory and whose data read/write frequencies are greater than the second preset value are the first N memory pages of the memory pages arranged in descending order of the data read/write frequencies in the memories of the processor. This finally achieves an effect that the local memory stores the N memory pages with the highest data read/write frequencies.

In a possible implementation, both the local memory and the remote memory are DRAMs.

In the method, when the memories of the processor have DRAMs with different performance, the local memory and the remote memory may be set based on the performance, to improve an access rate of the processor.

In a possible implementation, the local memory is a DRAM, and the remote memory is a non-DRAM storage.

In the method, when the memories of the processor include another type of memory in addition to the DRAM, the DRAM with high performance may be selected as the local memory. This ensures that the processor can efficiently gain access to data from the DRAM.

According to a second aspect, an embodiment of this application further provides a memory setting apparatus. For beneficial effects, refer to the descriptions of the first aspect. Details are not described herein again. The apparatus has a function of implementing behavior in the method instance of the first aspect. The function may be implemented by hardware, or may be implemented by hardware executing corresponding software. The hardware or the software includes one or more modules corresponding to the function. In a possible design, a structure of the device includes an obtaining module and a setting module. Optionally, the apparatus may further include a migration module and a determining module. These units may perform corresponding functions in the method example in the first aspect. For details, refer to the detailed descriptions in the method example. Details are not described herein again.

According to a third aspect, an embodiment of this application further provides a server. For beneficial effects, refer to descriptions of the first aspect. Details are not described herein again. A structure of the server includes a processor and at least two memories. The processor is configured to support execution of a corresponding function in the method in the first aspect. The at least two memories are coupled to the processor, and the at least two memories store program instructions and data that are necessary for the server. The structure of the server further includes a communications interface, configured to communicate with another device.

According to a fourth aspect, this application further provides a computer-readable storage medium. The computer-readable storage medium stores instructions, and when the instructions are run on a computer, the computer is enabled to perform the methods in the foregoing aspects.

According to a fifth aspect, this application further provides a computer program product including instructions. When the computer program product runs on a computer, the computer is enabled to perform the methods in the foregoing aspects.

According to a sixth aspect, this application further provides a computer chip. The chip is connected to a memory, and the chip is configured to read and execute a software program stored in the memory, to perform the methods in the foregoing aspects.

### BRIEF DESCRIPTION OF DRAWINGS

FIG. 1 is a schematic diagram of an architecture of a server according to this application;
FIG. 2 is a schematic diagram of another architecture of a server according to this application;
FIG. 3 is a schematic diagram of a memory setting method according to this application;
FIG. 4 is a schematic diagram of a data migration method according to this application;
FIG. 5 is a schematic diagram of a structure of a linked list according to this application;
FIG. 6 is a schematic diagram of a structure of a list according to this application;
FIG. 7 is a schematic diagram of a method for determining target memory units according to this application;
FIG. 8 is a schematic diagram of another data migration method according to this application;
FIG. 9 is a schematic diagram of priority division according to this application;
FIG. 10 is a schematic diagram of another method for determining target memory units according to this application;
FIG. 11 is a schematic diagram of distribution of target memory units according to this application; and
FIG. 12 is a schematic diagram of a structure of a memory setting apparatus according to this application.

### DESCRIPTION OF EMBODIMENTS

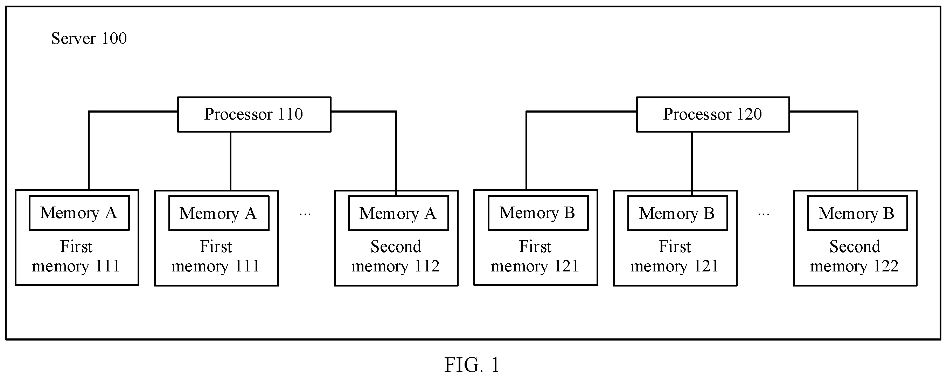

FIG. 1 is a schematic diagram of an architecture of a server 100 in an NUMA system according to an embodiment of this application. The server 100 includes one or more processors. Any processor is configured with memories of the processor, and the processor is connected to the memories of the processor through a system bus. The memories of each processor may be classified into two types: a local memory and a remote memory. The local memory and the remote memory are configured to store data required for running of the processor.

For example, the server 100 in FIG. 1 includes two processors: a processor 110 and a processor 120. Memories A of the processor 110 are classified into a local memory 111 and a remote memory 112. Performance of the local memory 111 is better than performance of the remote memory 112.

Memories B of the processor 120 are classified into a local memory 121 and a remote memory 122. Performance of the local memory 121 is better than performance of the remote memory 122.

In the conventional technology, a memory configured for a processor is generally set as a local memory, and a memory of another processor that can be gained access to by the processor is set as a remote memory. However, in embodiments of the present invention, a local memory and a remote memory are set based on performance of memories of a processor, so that the processor preferably gains access to a memory with better performance.

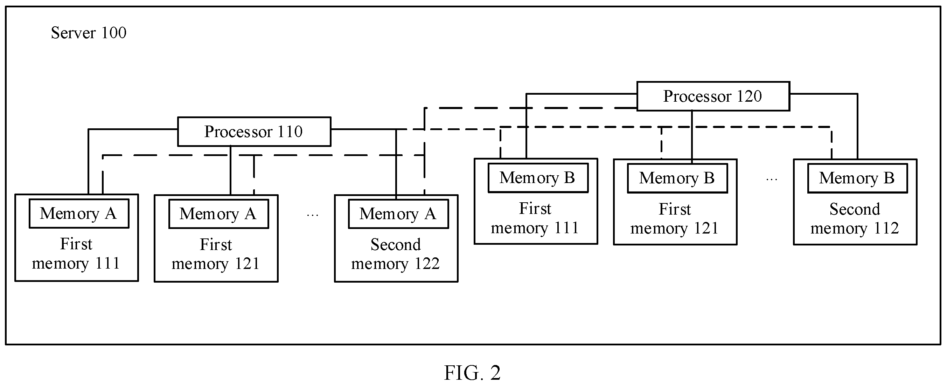

FIG. 2 is a schematic diagram of another architecture of a server 100 in a NUMA system according to an embodiment of this application. The server 100 includes one or more processors, and one processor may obtain data from a memory of another processor. That is, one processor may also be connected to a memory of another processor. For any processor, memories connected to the processor (the memories connected to the processor include a memory of the processor and a memory of another processor) are classified into a local memory and a remote memory. Performance of the local memory is better than performance of the remote memory. The local memory and the remote memory are configured to store data required for running of the processor. In the architecture in FIG. 2, a local memory and a remote memory are set based on performance of all memories that can be gained access to by the processor, so that the processor preferably gains access to a memory with better performance.

For example, the server in FIG. 2 includes two processors: a processor 110 and a processor 120. The processor 110 is connected to a memory B of the processor 120, and the processor 120 is connected to a memory A of the processor 110.

For the processor 110, memories connected to the processor 110 (namely, the memory A of the processor 110 and the memory B of the processor 120) may be classified into a local memory 111 and a remote memory 112.

For the processor 120, memories connected to the processor 120 (namely, the memory A of the processor 110 and the memory B of the processor 120) may be classified into a local memory 121 and a remote memory 122.

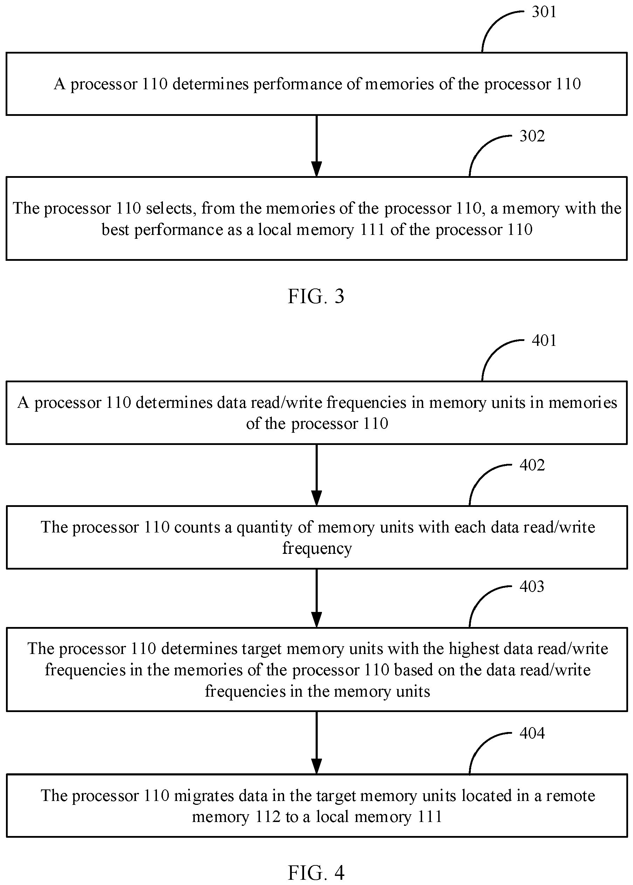

In a current NUMA system, when a server is started, each processor detects distances between all memories in the system and the processor, and sets the closest processor as a local memory and sets another memory as a remote memory. However, in embodiments of this application, when a server is started, performance of all memories in the system or performance of memories of the processor is detected, a memory with best performance is set as the local memory, and another memory is set as the remote memory. For example, performance of the local memory 121 is better than that of the remote memory 122 in FIG. 1 and FIG. 2. For a method of setting a local memory and a remote memory based on memory performance, refer to descriptions in FIG. 3.

The following uses the local memory 121 and the remote memory 122 as an example to describe types of a local memory and a remote memory. Generally, there are the following several cases.

Case 1: The local memory 111 and the remote memory 112 are of a same type, but performance of the local memory 111 is better than that of the remote memory 112.

In the architecture of the server shown in FIG. 1, if types of the memories of the processor 110 are the same, the local memory 111 is a memory with the highest performance in the memories of the processor 110, and a remaining memory is the remote memory 112. In the architecture of the server shown in FIG. 2, if types of the memories connected to the processor 110 are the same, the local memory 111 is a memory with the highest performance in the memories connected to the processor 110, and a remaining memory is the remote memory 112.

For example, the memories of the processor 110 or the memories connected to the processor 110 are dynamic random access memories (dynamic random access memories, DRAMs). However, even memories of a same type have different performance. For example, both a double data rate 3 (double data rate, DDR 3) synchronous dynamic random access memory and a DDR 4 synchronous dynamic random access memory are DRAMs, but performance of the DDR 4 is generally better than performance of the DDR 3. For another example, compared with a DRAM without an error correcting code (error correcting code, ECC) function, a DRAM with an ECC function can ensure data integrity and has higher security. For another example, a DRAM with a higher memory frequency has better performance. For another example, a memory whose manufacturing date is closer to a current date has better performance. For another example, performance of a memory made by a mainstream manufacturer is better than that of a memory made by a non-mainstream manufacturer.

In this case, both the local memory 111 and the remote memory 112 are DRAMs. The local memory 111 may be a DRAM with the best performance in the memories of the processor 110, and a remaining DRAM may be used as the remote memory 112 (in the architecture of the server shown in FIG. 1). The local memory 111 may be a DRAM with the best performance in the memories connected to the processor 110, and a remaining DRAM may be used as the remote memory 112 (in the architecture of the server shown in FIG. 2).

Case 2: The local memory 111 and the remote memory 112 are of different types, but performance of the local memory 111 is better than that of the remote memory 112.

In the architecture of the server shown in FIG. 1, if types of the memories of the processor 110 are different, the local memory 111 is a memory with the highest performance in the memories of the processor 110, and a remaining memory is the remote memory 112. In the architecture of the server shown in FIG. 2, if types of the memories connected to the processor 110 are different, the local memory 111 is a memory with the highest performance in the memories connected to the processor 110, and a remaining memory is the remote memory 112.

For example, in addition to the DRAMs, the memories of the processor 110 or the memories connected to the processor 110 may be of another type, for example, a data center persistent memory (data center persistent memory, DCPMM).

The DCPMM is a special memory, and may be used as a non-volatile memory or a volatile memory in different modes. For example, the DCPMM has three different modes, including a memory mode (memory mode, MM), an application direct (app direct, AD) mode, and a mixed mode (MIX). The DCPMM in the memory mode may be used as the volatile memory, and the DCPMM in the application direct mode may be used as the non-volatile memory, so that data is not lost in case of a power failure. A part of storage space of the DCPMM in the mixed mode may be used as a non-volatile memory, and a part of the storage space may be used as a volatile memory.

The DCPMM is merely an example. A specific type of memory of another type is not limited in this embodiment of this application. Any memory that can be configured to store data required for running of the processor 110 is applicable to embodiments of this application. It should be noted that a memory in this application is a memory that can implement byte-level access.

In this case, the local memory 111 and the remote memory 112 are of different types. The local memory 111 may be a DRAM in the memories of the processor 110, and a remaining type of memory may be used as the remote memory 112 (in the architecture of the server shown in FIG. 1). The local memory 111 may be a DRAM of the memories connected to the processor 110, and a memory of another type may be used as the remote memory 112 (in the architecture of the server shown in FIG. 2).

For another example, the memories of the processor 110 or the memories connected to the processor 110 include a plurality of DRAMs with different performance, and includes another type of memory in addition to the DRAMs.

In this case, the local memory 111 and the remote memory 112 are of different types. The local memory 111 may be a DRAM with the best performance in the memories of the processor 110, and a remaining memory may be used as the remote memory 112 (in the architecture of the server shown in FIG. 1). The local memory 111 may be a DRAM with the best performance in the memories connected to the processor 110, and a remaining memory may be used as the remote memory 112 (in the architecture of the server shown in FIG. 2).

With reference to FIG. 3, the following describes, by using the architecture of the server shown in FIG. 1 as an example, a memory allocation manner provided in embodiments of this application. As shown in FIG. 3, the method includes the following steps.

Step 301: A processor 110 determines performance of memories of the processor 110.

The processor 110 may read information detected by a serial presence detection (serial presence detect, SPD) chip, and determine performance of the memories based on the information read by the SPD chip. During a system startup phase, the SPD chip can detect a memory inserted into each memory slot in a server. After detecting each memory, the SPD chip may store detected information in the memories of the processor 110, so that the processor 110 subsequently reads the information detected by the SPD chip.

The information detected by the SPD includes information about each memory. The information about each memory includes but is not limited to information such as a type of the memory, whether the memory has an ECC function, a memory frequency, a manufacturing date (a production date of the memory), and a manufacturer (a name of a manufacturer that manufactures the memory).

The type of the memory may indicate whether the memory is a DRAM (for example, a DDR3 or a DDR4) or a memory of another type except a DRAM

If the memories of the processor 110 are of a same type, all the memories are DRAMs.

When determining the performance of the memories based on the information detected by the SPD chip, the server may compare information about the memories, and determine the performance of the memories based on information about difference between the memories. The information about difference between the memories indicates information, in the information detected by the SPD, that there is a difference between the memories.

For example, the information detected by the SPD records that a type of a memory 1 is a DDR3, and a type of a memory 2 is a DDR4. Types of memories are the information about difference. The processor 110 determines that performance of the memory 2 is better than that of the memory 1. For another example, the information detected by the SPD records that types of the memory 1 and the memory 2 are both DDR 4, but the memory 1 has an ECC function, and the memory 2 does not have the ECC function. Information about whether the memory 1 and the memory 2 have the ECC function is the information about difference. The processor 110 determines that the performance of the memory 1 is better than that of the memory 2. For another example, the information detected by the SPD records that the memory 1 and the memory 2 each are a DDR 4, but a frequency of the memory 1 is higher than a frequency of the memory 2. The memory frequency is the information about difference. The processor 110 determines that the performance of the memory 1 is better than that of the memory 2. For another example, the information detected by the SPD records that the memory 1 and the memory 2 each are a DDR 4, but both the frequency of the memory 1 and the frequency of the memory 2 are high frequencies. Manufacturers are the information about difference. A manufacturer of the memory 1 is a mainstream manufacturer, and a manufacturer of the memory 2 is a non-mainstream manufacturer. The processor 110 determines that the performance of the memory 1 is better than that of the memory 2.

If the types of the memories of the processor 110 are different, in addition to a DRAM, a memory of another type is included.

In this case, the processor 110 may consider by default that performance of the DRAM is better than that of another type of memory.

In a possible implementation, when a plurality of memories of the processor 110 include a plurality of different DRAMs, the processor 110 may determine performance of the plurality of different DRAMs by using the foregoing method.

Step 302: The processor 110 selects, from the memories of the processor 110, a memory with the best performance as a local memory 111 of the processor 110.

After determining the performance of the memories of the processor 110, the processor 110 may preferably select the memory with the best performance as the local memory 111, and use a remaining memory as a remote memory 112.

In the NUMA system, during the system startup phase, an acpi_numa_memory_affinity_init function may be invoked to set a NUMA type field corresponding to the remote memory 112 to numa_nodes_pmem, and set a NUMA type field corresponding to the local memory 111 to numa_nodes_dram.

A size of the local memory 111 is not limited in this embodiment of this application. The server may estimate, based on a process run by the processor 110, an amount of data that needs to be stored in the running process, and determine the size of the local memory 111 based on the amount of data. For example, the process run by the processor 110 is used to maintain a database, and the amount of data that needs to be stored is large. The size of the local memory 111 may be determined based on an amount of data that often needs to be read and written in the maintained database, and a memory with a size close to the amount of data and the best performance is selected from the memories of the processor 110 as the local memory 111. The amount of data that often needs to be read and written in the database may be evaluated and determined by using an input output (input output, I/O) model of the database.
(1) When the memories of the processor 110 are of a same type and are DRAMs, the processor 110 may select a DRAM with the best performance as the local memory 111 of the processor 110.
(2) In addition to a DRAM, the memories of the processor 110 includes another type of memory, and the processor 110 may select the DRAM as the local memory 111 of the processor 110. Further, if there are various types of DRAMs with different performance in the memories of the processor, the processor 110 may select a DRAM with the best performance from the DRAMs as the local memory 111 of the processor 110.

Each processor in the server 100 may set the local memory 111 based on the method shown in FIG. 3. The method shown in FIG. 3 may also be applied to the architecture of the server shown in FIG. 2, that is, the processor 110 needs to determine performance of the memories connected to the processor, and select a memory with the best performance as the local memory 111 of the processor 110. For a specific implementation, refer to the foregoing content, and details are not described herein again.

For any processor, memories of the processor are classified into a local memory and a remote memory, and the local memory and the remote memory may be configured to store data required for running of the processor. However, because the processor has high efficiency of reading/writing data from/to the local memory with good performance, data with the highest read/write frequency in the memories of the processor may be stored in the local memory, that is, data with high read/write efficiency in the remote memory needs to be migrated to the local memory, so that the processor has high data read/write efficiency.

With reference to FIG. 4, based on the architecture of the server shown in FIG. 1, the following describes a method for migrating data between the local memory 111 and the remote memory 112 of the processor 110. Refer to FIG. 4. The method includes the following steps.

Step 401: The processor 110 determines data read/write frequencies in memory units in memories of the processor 110.

When data is stored in the memory of the processor 110, the data is usually stored at a granularity of the memory unit (for example, a memory page). In other words, the memory may include a plurality of memory units, and each memory unit may store an equal amount of data. The processor 110 may determine the data read/write frequencies in the memory units.

When the processor 110 performs step 401, step 401 may be divided into the following two steps.

Step 1: The processor 110 reads information in an extended page table (extended page table, EPT) for a plurality of times, and determines a quantity of times of reading data from each memory unit in the memories of the processor 110 and a quantity of times of writing the data in each memory unit.

The EPT records a read/write status in each memory unit. Each memory unit corresponds to two fields in the EPT: a dirty bit (for ease of description, referred to as a field D for short) and an access bit (for ease of description, referred to as a field A for short).

The field D is used to indicate whether data is written into the memory unit. For example, 0 indicates that data is written, and 1 indicates that no data is written. The field A is used to indicate whether to read data in the memory unit. For example, 0 indicates that no data is read, and 1 indicates that the data is read.

For any memory unit in the memories of the processor 110, each time data in the memory unit is read or data is written into the memory unit, corresponding fields in the EPT are updated.

For example, when data in a memory unit is read, in the EPT, a field D corresponding to the memory unit changes to 0, and a field A corresponding to the memory unit changes to 1. When data is written into the memory unit, in the EPT, a field D corresponding to the memory unit changes to 1, and a field A corresponding to the memory unit changes to 1.

When reading the information in the EPT for a plurality of times, the processor 110 may read the information in the EPT at a specific interval within a time period, and a quantity of reading times may be a specified value. For a memory unit, if information in the EPT records that data in the memory unit is read, a quantity of times that the data in the memory unit is read is increased by 1. Alternatively, if information in the EPT records that data in the memory unit is written, a quantity of times that the data of the memory unit is written is increased by 1. After a quantity of times of reading the information in the EPT reaches a specified value, a quantity of times of reading data from and a quantity of times of writing data in each memory unit in the memories of the processor 110 that are recorded by the processor 110 are determined.

It should be noted that a specific quantity of times of reading the EPT herein is not limited in this embodiment of this application. It can be learned from the foregoing that, the quantity of times of reading the data from and the quantity of times of writing the data in each memory unit in the memories of the processor 110 that are determined by the processor 110 by reading the information in the EPT for a plurality of times are not necessarily an accurate quantity of times of actually reading the data from and an accurate quantity of times of actually writing the data in each memory unit within the time period, but may reflect relative values of the quantity of times of reading the data from and the quantity of times of writing the data in each memory unit to some extent.

Step 2: The processor 110 determines a data read/write frequency in each memory unit based on the quantity of times of reading the data from and the quantity of times of writing the data in each memory unit.

When the processor 110 calculates the data read/write frequency in each memory unit, the data read/write frequency in the memory unit may be determined based on the quantity of times of reading the data from and the quantity of times of writing the data in the memory unit. For example, for any memory unit, a data read/write frequency in the memory unit may be equal to a sum of a quantity of times of reading data from and a quantity of times of writing data in the memory unit. For another example, a read weight and a write weight may be set separately, and a product 1 of the quantity of times of reading the data from the memory unit and the read weight and a product 2 of the quantity of times of writing the data in the memory unit and the write weight are calculated. The data read/write frequency in the memory unit may be equal to a sum of the product 1 and the product 2. Specific values of the read weight and the write weight are not limited in this embodiment of this application, and may be set based on a specific application scenario.

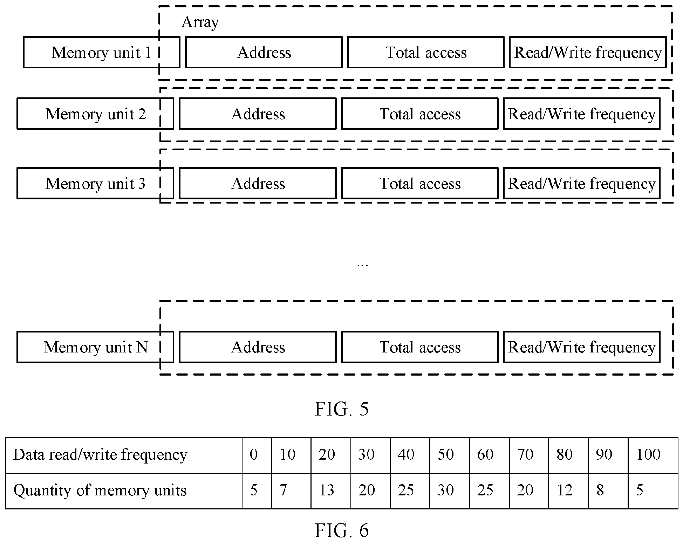

Therefore, the processor 110 can calculate the data read/write frequency in each memory unit, and the processor 110 may store the data read/write frequency in each memory unit. When storing the data read/write frequency in each memory unit, the processor 110 may construct a linked list to record the data read/write frequency in the memory unit. FIG. 5 is a schematic diagram of a linked list constructed by the processor 110. Each memory unit corresponds to an array, and the array includes an address of the memory unit, a total access amount of the memory unit (a sum of a quantity of times of reading data from and a quantity of times of writing data in the memory unit), and a data read/write frequency in the memory unit.

Step 402: The processor 110 counts a quantity of memory units with each data read/write frequency.

After calculating the data read/write frequency in each memory unit, the processor 110 may count a quantity of memory units with a same data read/write frequency, and store the quantity of memory units with each data read/write frequency. Quantities of memory units with each data read/write frequency may form a list stored in the processor 110. FIG. 6 is a list of quantities of memory units with each data read/write frequency stored in the processor 110. The list records quantities of memory units with different data read/write frequencies. Values shown in FIG. 6 are merely examples.

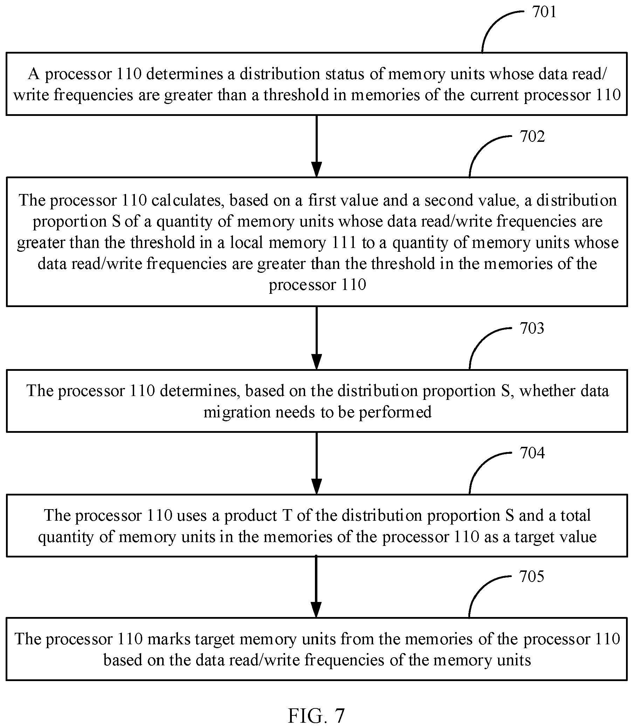

Step 403: The processor 110 determines, based on the data read/write frequency in each memory unit, target memory units whose data read/write frequencies are not less than a preset value in the memories of the processor 110, where a quantity of the target memory units is equal to a target value N, the target value N may be an empirical value, or may be determined based on a product of a distribution proportion S and the quantity of memory units in the memories of the processor 110, the distribution proportion S is equal to a ratio of a quantity of memory units whose data read/write frequencies are greater than a threshold in the local memory 111 to a quantity of memory units whose data read/write frequencies are greater than the threshold in the memories of the processor 110, and for a specific method for determining the target memory units, refer to descriptions in FIG. 7.

Step 404: The processor 110 migrates data in target memory units located in the remote memory 112 to the local memory 111.

After the target memory units are marked, the processor 110 determines the target memory units in the remote memory 112. A manner in which the processor 110 determines that the target memory units are located in the local memory 111 or the remote memory 112 is the same as a manner of determining that a memory unit is located in the local memory 111 or the remote memory 112. For details, refer to related descriptions of step 701 in an embodiment shown in FIG. 7, and details are not described herein again. Then, the data in the target memory units in the remote memory 112 are migrated to the local memory 111.

In a possible implementation, when performing step 404, the processor 110 may replace data in an unmarked memory unit in the local memory 111 with the data in the target memory unit in the remote memory 112, and store the original data in the local memory 111 into the remote memory 112.

FIG. 7 shows a method for determining target memory units according to an embodiment of this application. The method includes the following steps.

Step 701: The processor 110 may first determine a distribution status of memory units whose data read/write frequencies are greater than a threshold in memories of the current processor 110.

The processor 110 may traverse each memory unit in the memories of the processor 110. When a data read/write frequency in the traversed memory unit is greater than the threshold, the processor 110 may invoke a function move-page () to enter a virtual address of the memory unit, and determine whether the memory unit is in the local memory 111 or the remote memory 112 based on a parameter returned by the function move-page (). Till all memory units in the memories of the processor 110 are traversed, the processor 110 may calculate a quantity of memory units whose data read/write frequencies are greater than the threshold in the local memory 111 and a quantity of memory units whose data read/write frequencies are greater than the threshold in the remote memory 112.

It should be noted that the function move-page () may output the parameter based on the entered virtual address of the memory unit, and the parameter may indicate a processor to which the local memory belongs when the memory unit is a memory unit in the local memory. In this embodiment of this application, the local memory 111 and the remote memory 112 are essentially memories of the processor 110. In order to distinguish the local memory 111 from the remote memory 112, the processor 110 may set the remote memory 112 as a local memory 111 of a virtual processor, and the virtual processor may not perform any processing operation. When the parameter returned by the function move-page () indicates the processor 110, it indicates that the memory unit is located in the local memory 111, and when the returned parameter indicates the virtual processor, it indicates that the memory unit is located in the remote memory 112.

It is assumed that the processor 110 determines that the quantity of memory units whose data read/write frequencies are greater than the threshold in the local memory 111 is a first value, and the quantity of memory units whose data read/write frequencies are greater than the threshold in the remote memory 112 is a second value.

If a difference between the second value and the first value is small, it indicates that the quantity of memory units whose data read/write frequencies are greater than the threshold in the remote memory 112 is large, and the processor 110 reads/writes data from/to the remote memory 112 at a high frequency. As a result, the processor 110 has low efficiency of reading/writing the data, and needs to migrate data with the high read/write frequency in the remote memory 112 to the local memory 111.

If the difference between the second value and the first value is large, and the second value is small, it indicates that the quantity of memory units whose data read/write frequencies are greater than the threshold in the remote memory 112 is small, data with a high read/write frequency in the remote memory 112 is also small, and the processor 110 reads/writes the data from/to second data at a low frequency. In this case, data migration may not be performed.

It should be noted that a specific value of the threshold is not limited in this embodiment of this application. For example, the threshold may be zero, and the processor 110 may count a quantity of non-cold pages in the local memory 111 and a quantity of non-cold pages in the remote memory 112. A cold page is a memory page that is seldom read or written in a memory, and a non-cold page is a memory page other than the cold page.

Step 702: The processor 110 may calculate, based on the quantity of memory units whose data read/write frequencies are greater than the threshold in the local memory 111 (the first value) and the quantity of memory units whose data read/write frequencies are greater than the threshold in the remote memory 112 (the second value), a distribution proportion S of the quantity of memory units whose data read/write frequencies are greater than the threshold in the local memory 111 to the quantity of memory units whose data read/write frequencies are greater than the threshold in the memories of the processor 110. The first value is T1, the second value is T2, and the distribution proportion S = T1/(T1 + T2).

Step 703: The processor 110 may determine, based on the distribution proportion S, whether data migration needs to be performed. For example, the distribution proportion S is close to 100%. For example, if the distribution proportion S is between 90% and 100%, it indicates that the local memory 111 stores most data that needs to be frequently read or written. If the distribution proportion S is lower than 90%, it indicates that a part of data that needs to be frequently read or written is stored in the remote memory 112, and data migration needs to be performed.

Alternatively, the processor 110 may not determine, based on the distribution proportion S, whether data migration needs to be performed (that is, step 703 is not performed), but directly perform data migration. Before performing data migration, the processor 110 needs to first determine a quantity of target memory units based on the distribution proportion S (step 704), and then mark the target memory units in the memories of the processor 110 based on the quantity of target memory units (step 705).

Step 704: The processor 110 uses a product T of the distribution proportion S and a total quantity of memory units in the memories of the processor 110 as a target value N, where the target value N is a quantity of memory units whose data read/write frequencies rank first S in the memories of the processor 110.

In this embodiment of this application, the target value N is allowed to fluctuate within a small range. For example, after calculating the target value N, the processor 110 may update the target value N, for example, subtract a specified value from the target value N. For another example, the processor 110 may also select a value S1 less than the distribution proportion S, and use a product of S1 and the total quantity of memory units in the memories of the processor 110 as the target value N. A manner in which the processor 110 selects S1 is not limited in this embodiment of this application. For example, the processor 110 may obtain S1 by subtracting the specified value from the distribution proportion S.

Step 705: After determining the target value N, the processor 110 marks the target memory units in the memories of the processor 110 based on the data read/write frequencies in the memory units.

It can be learned from the foregoing content that the distribution proportion S may reflect the quantity of memory units whose data read/write frequencies are greater than the threshold (data that needs to be frequently read) and that can be stored in the local memory 111. For example, if the first value calculated by the processor 110 through statistics collection is 40, the second value is 60, and the calculated distribution proportion is 40%, it indicates that the local memory 111 currently stores data in 40% of the memory units whose data read/write frequencies are greater than the threshold in the memories of the processor 110. However, before data migration is not performed, data in the memory units whose data read/write frequencies are greater than the threshold in the local memory 111 does not necessarily include data with the highest data read/write frequency in the memories of the processor 110.

To ensure that data stored in the 40% of the memory units in the local memory 111 whose data read/write frequencies are greater than the threshold is data in memory units with the highest data read/write frequency in the memories of the processor 110 and ranked in the first 40%, the processor 110 may first calculate a quantity N of memory units with the highest data read/write frequency and ranked in the first 40%. Then, the processor marks, based on the data read/write frequencies in the memory units, the target memory units whose quantity is equal to N. In this way, the marked target memory units are memory units with the highest data read/write frequency and ranked in the first 40%.

If the product T of the distribution proportion S and the total quantity of memory units in the memories of the processor 110 is not used as the target value N, when the target value N is too large, a large amount of data is migrated between the local memory 111 and the remote memory 112, and data needs to be frequently migrated between the local memory 111 and the remote memory 112. As a result, performance of the entire system is reduced. When the target value N is too small, only a small amount of data is migrated between the local memory 111 and the remote memory 112, and after the data is migrated, only a small part of data stored in the local memory 111 needs to be frequently read and written by the processor 110. Data read/write efficiency of the processor 110 cannot be improved. It can be learned that the target value N determined based on the distribution proportion S specifies an upper limit of a quantity of memory units that need to store data with a relatively high read/write frequency in the local memory 110 during data migration. This can ensure that the local memory 111 can store, without changing the distribution proportion S, much data that needs to be frequently read/written.

The following describes a manner of marking the target memory units in the memories of the processor 110 based on the data read/write frequencies in the memory units of the processor 110.

The processor 110 may first determine a target data read/write frequency. A quantity of memory units whose data read/write frequencies are greater than the target data read/write frequency in the memories of the processor 110 is less than the target value N, and a quantity of memory units whose data read/write frequencies are not less than the target data read/write frequency in the memories of the processor 110 is not less than the target value N.

For example, the processor 110 may sequentially accumulate, starting from a quantity of memory units with the highest data read/write frequency, pre-stored quantities of memory units with data read/write frequencies in descending order of the data read/write frequencies, and record an accumulated value D until the accumulated value D is closest to the target value N but is not greater than the target value N, and use a maximum data read/write frequency that has not been accumulated as the target data read/write frequency.

For example, the target value N is 80, and the pre-stored quantities of memory units with data read/write frequencies are shown in FIG. 6. The processor 110 may start accumulation from a quantity of memory units with a data read/write frequency of 100. When a quantity of memory units with a data read/write frequency of 60 is accumulated, an accumulated value is 70, and 70 is closest to the target value 80 and is less than the target value N (when a quantity of memory units with a data read/write frequency of 50 is accumulated, the accumulated value is 100, and is greater than the target value N). The data read/write frequency 50 is the target data read/write frequency.

Then, the processor 110 marks the target memory units. For example, the processor 110 marks memory units whose data read/write frequencies are greater than the target data read/write frequency in the memories of the processor 110, and may further mark some of the memory units with the target data read/write frequency. A quantity of the some memory units is equal to a difference between the target value N and the accumulated value.

Still, for example, the target value N is 80, and the pre-stored quantities of memory units with data read/write frequencies are shown in FIG. 6. The data read/write frequency 50 is the target data read/write frequency. The processor 110 marks memory units whose data read/write frequencies are greater than 50 in the memories of the processor 110, and then marks 10 (the difference between the target value 80 and the accumulated value 70) memory units in the memory units whose data read/write frequencies are 50.

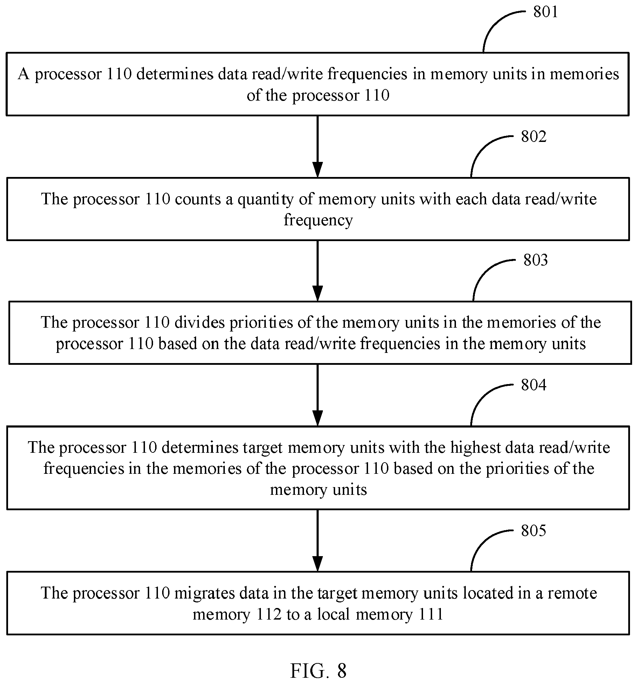

The data in the target memory units marked by the processor 110 is data whose read frequencies rank the first S in the memories of the processor 110, and includes data in memory units whose data read/write frequencies are not less than the preset value (namely, the target data read/write frequency) in the memories of the processor 110. In this way, when the processor 110 performs data reading/writing, most data reading/writing operations occur in the local memory 111, which can effectively improve data reading/writing efficiency of the processor 110. With reference to FIG. 8, based on the architecture of the server shown in FIG. 1, the following describes another manner of migrating data between the local memory 111 and the remote memory 112 of the processor 110. Refer to FIG. 8. The method includes the following steps.

Step 801 is the same as step 401. For details, refer to the foregoing content, and details are not described herein again.

Step 802 is the same as step 402. For details, refer to the foregoing content, and details are not described herein again.

Step 803: The processor 110 divides priorities of memory units in memories of the processor 110 based on data read/write frequencies in the memory units.

A memory unit with a high data read/write frequency has a high priority. A priority division manner is not limited in this embodiment of this application. For example, the processor 110 may divide priorities based on the lowest data read/write frequency by using 20 as a step. For example, if the lowest data read/write frequency is 0, memory units whose data read/write frequencies range from 0 to 20 are at a priority, and the priority is denoted as a priority 1. Memory units whose data read/write frequencies range from 30 to 50 are at a priority, and the priority is denoted as a priority 2. Memory units whose read/write frequencies range from 60 to 80 are at a priority, and the priority is denoted as a priority 3. Memory units whose read/write frequencies range from 90 to 100 are at a priority, and the priority is denoted as a priority 4.

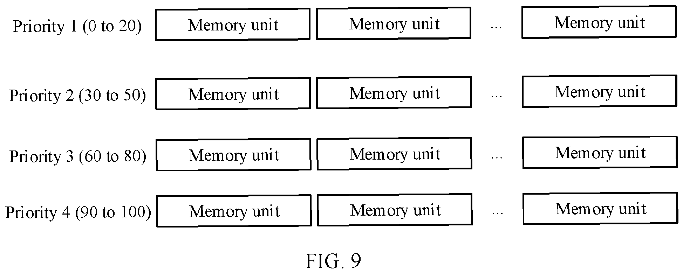

The processor 110 may store the priorities of the memory units. The processor 110 may store the priorities of the memory units in a queue manner. As shown in FIG. 9, the processor 110 may store each priority queue, and priorities belonging to a same queue are the same. Each priority queue records a priority of the priority queue and information (such as an identifier and a virtual address of a memory unit) about a memory unit included in the priority.

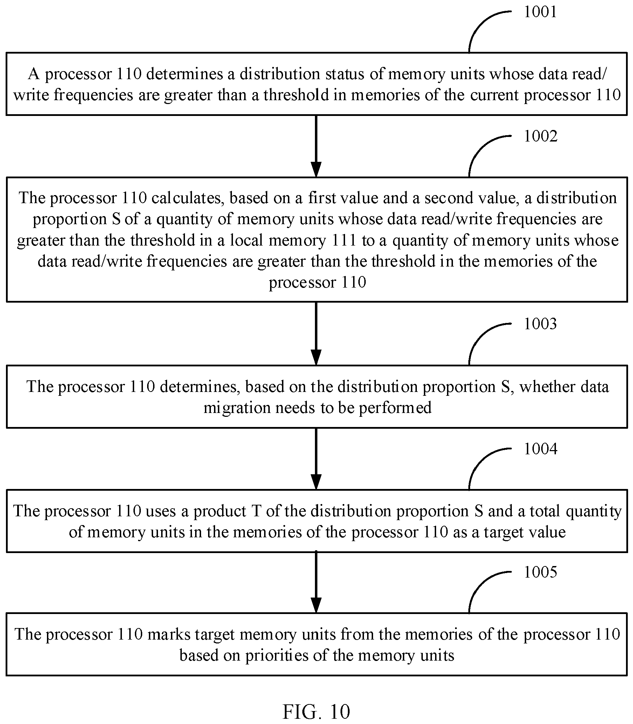

Step 804: The processor 110 determines, based on the priorities of the memory units in the memories of the processor 110, target memory units whose data read/write frequencies are not less than a preset value in the memories of the processor 110, where a quantity of the target memory units is equal to a target value N, and for description of the target value N, refer to the foregoing content, and details are not described herein again. For a specific method for determining the target memory units, refer to the description in FIG. 10.

Step 805 is the same as step 404. For details, refer to the foregoing content, and details are not described herein again.

FIG. 10 shows another method for determining target memory units according to an embodiment of this application. The method includes the following steps.

Step 1001 is the same as step 701. For details, refer to the foregoing content, and details are not described herein again.

Step 1002 is the same as step 702. For details, refer to the foregoing content, and details are not described herein again.

Step 1003 is the same as step 703. For details, refer to the foregoing content, and details are not described herein again.

Step 1004 is the same as step 704. For details, refer to the foregoing content, and details are not described herein again.

Step 1005: After determining a target value N, the processor 110 marks the target memory units in memories of the processor 110 based on priorities of memory units.

The processor 110 may first determine a target priority of memory units in the memories of the processor 110. The target priority needs to meet the following conditions: A total quantity of memory units whose priorities are greater than the target priority in the memories of the processor 110 is less than the target value N, and a total quantity of memory units whose priorities are not less than the target priority in the memories of the processor 110 is not less than the target value N.

There are many manners in which the processor 110 determines the target priority. The following enumerates two of the manners.
(1). The processor 110 may sequentially accumulate, starting from a quantity of memory units with the highest data read/write frequency, pre-stored quantities of memory units with data read/write frequencies in descending order of the read/write frequencies, and record an accumulated value D until the accumulated value D is closest to the target value N but is not greater than the target value N, and use the highest priority of the memory units not accumulated as the target priority. The target priority is also a priority to which memory units with a maximum data read/write frequency currently not accumulated belongs.

For example, the pre-stored quantities of memory units with read/write frequencies are shown in FIG. 6, priority division is shown in FIG. 9, and the target value N is 80. The processor 110 may start accumulation from a quantity of memory units with a read/write frequency of 100. When a quantity of memory units with a read/write frequency of 60 is accumulated, an accumulated value is 70, and 70 is closest to the target value 80 and is less than the target value N (when a quantity of memory units with a data read/write frequency of 50 is accumulated, the accumulated value is 100 and is greater than the target value N). The priority 2 to which the read/write frequency of 50 belongs is the target priority.

(2). The processor 110 may sequentially accumulate, starting from a quantity of memory units with the highest priority, pre-stored quantities of memory units with read/write frequencies and ranges of read/write frequencies corresponding to priorities in descending order of the priorities, and record an accumulated value D until the accumulated value D is closest to the target value N but is not greater than the target value N, and use the highest priority of the memory units not accumulated as the target priority.

Still, for example, the pre-stored quantities of memory units of data with data read/write frequencies is shown in FIG. 6, priority division is shown in FIG. 9, and the target value N is 80. The processor 110 may start accumulation from a quantity of memory units in the priority 4. When a quantity of memory units in the priority 3 is accumulated, an accumulated value is 45, and 45 is closest to the target value 80 and is less than the target value N (when a quantity of memory units in the priority 2 is accumulated, the accumulated value is 145, and is greater than the target value N). The highest priority that is not accumulated is the priority 2, namely, the target priority.

The processor 110 marks a memory unit whose priority is higher than the target priority in the memories of the processor 110, and may further mark some of the memory units in the target priority. A quantity of the some memory units is equal to a difference between the target value N and the accumulated value, and read/write frequencies in the some memory units are not less than the target data read/write frequency.

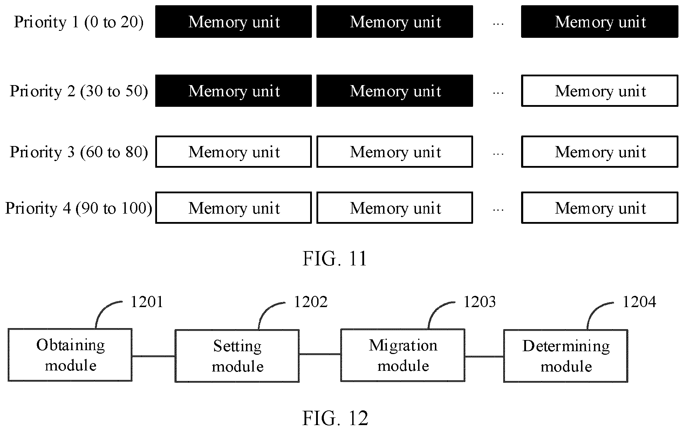

Still, for example, the target value N is 80, and the pre-stored quantities of memory units with data read/write frequencies are shown in FIG. 6. The priority 3 is the target priority. The processor 110 marks memory units whose priority is greater than 2 in the memories of the processor 110, and then marks memory units whose read/write frequencies are 50 in the memory units whose priority is 2. The processor 110 needs to mark 10 memory units whose read/write frequencies are 50, so that a quantity of finally marked memory units can reach the target value N. FIG. 11 shows target memory units marked by the processor 110, where memory units with a black background color are the target memory units.

Data in the target memory units marked by the processor 110 is data whose data read/write frequencies rank the first S in the memories of the processor 110, and includes data in a memory unit whose data read/write frequency is greater than the preset value in the memories of the processor 110.

In addition, the processor 110 may also migrate data with the lowest data read/write frequency in the memories of the processor 110 and located in the local memory 111 to the remote memory 112. A method for migrating the data from the local memory 111 to the remote memory 112 is not limited in embodiments of this application. The processor 110 may migrate data whose data read/write frequency is less than a threshold in the local memory 111 to the remote memory 112.

Based on a same inventive concept as method embodiments, an embodiment of this application further provides a memory setting apparatus, configured to perform the method performed by the processor 110 in the foregoing method embodiments. For related features, refer to the foregoing method embodiments. Details are not described herein again. As shown in FIG. 12, the apparatus is configured to set at least two memories of the processor, and the apparatus includes an obtaining module 1201 and a setting module 1202. Optionally, the apparatus further includes a migration module 1203 and a determining module 1204.

The obtaining module 1201 is configured to obtain performance of the at least two memories when the processor is started. The obtaining module is configured to perform step 301 in the embodiment shown in FIG. 3.

The setting module 1202 is configured to: set, based on the performance of the at least two memories, at least one of the at least two memories as a local memory, and at least one of the at least two memories as a remote memory. Performance of the local memory is better than performance of the remote memory. The setting module is configured to perform step 302 in the embodiment shown in FIG. 3.

In a possible implementation, the apparatus may further migrate data between the local memory and the remote memory. The migration module 1203 may migrate data whose data read/write frequency is not lower than a first preset value (for example, the target data read/write frequency in the foregoing method embodiment) in the remote memory to the local memory. The migration module 1203 is configured to perform the embodiment shown in FIG. 4 or FIG. 8.

In a possible implementation, the determining module 1204 may be configured to determine the first preset value. The first preset value may be an empirical value, or may be determined based on a data read/write frequency of each memory page in memories of the processor.

For example, the determining module 1204 may use first N memory pages in memory pages arranged in descending order of data read/write frequencies in the memories as memory pages that need to be stored in the local memory. The determining module 1204 may set a data read/write frequency of an N^{th} memory page in the memory pages arranged in descending order of the data read/write frequencies in the memories to the first preset value. The determining module 1204 is configured to perform the embodiment shown in FIG. 7.

For another example, the determining module 1204 may divide priorities for the memory pages in the memories based on data read/write frequencies of the memory pages in the memories. Each priority corresponds to a data read/write frequency range, and different priorities correspond to different data read/write frequency ranges. The first N memory pages of the memory pages arranged in descending order of the priorities in the memories are used as memory pages that need to be stored in the local memory, and a data read/write frequency of the N^{th} memory page is the first preset value. The determining module 1204 is configured to perform the embodiment shown in FIG. 10.

In a possible implementation, when determining a quantity N of memory pages that need to be stored in the local memory, the determining module 1204 may separately determine quantities of memory pages in the local memory and the remote memory whose data read/write frequencies are greater than a second preset value, and then, determine a proportion of a quantity of the memory pages whose data read/write frequencies are greater than the second preset value in the local memory to a quantity of memory pages whose data read/write frequencies are greater than the second preset value in the memories. A product of the proportion and a total quantity of used memory pages in the memories may be used as the quantity N.

In a possible implementation, both the local memory and the remote memory are DRAMs.

In a possible implementation, the local memory is a DRAM, and the remote memory is a non-DRAM

In a simple embodiment, a person skilled in the art may figure out that a server in which the processor in embodiments is located may be shown in FIG. 1 or FIG. 2. Specifically, functions/implementation processes of the obtaining module 1201, the setting module 1202, the migration module 1203, and the determining module 1204 in FIG. 12 may be implemented by the processor 110 in FIG. 1 or FIG. 2 by invoking computer-executable instructions stored in a memory of the processor.

A person skilled in the art should understand that embodiments of this application may be provided as a method, a system, or a computer program product. This application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

Obviously, a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

## Claims

1. A memory setting method, wherein the method is performed by a processor in a non-uniform memory access architecture NUMA system, the processor comprises at least two memories, and the method comprises:
obtaining performance of the at least two memories when the processor is started; and
setting, based on the performance of the at least two memories, at least one of the at least two memories as a local memory, and at least one of the at least two memories as a remote memory, wherein performance of the local memory is better than performance of the remote memory.

2. The method according to claim 1, wherein the method further comprises:
migrating data in the remote memory whose data read/write frequency is not lower than a first preset value to the local memory.

3. The method according to claim 2, wherein the method further comprises:
determining a quantity N of memory pages that need to be stored in the local memory, wherein the quantity N of the memory pages that need to be stored in the local memory is first N of memory pages arranged in descending order of data read/write frequencies in the memories; and
determining a data read/write frequency of an N^{th} memory page as the first preset value.

4. The method according to claim 2, wherein the method further comprises:
dividing priorities for memory pages in the memories based on the data read/write frequencies of the memory pages in the memories, wherein each priority corresponds to a data read/write frequency range, and different priorities correspond to different data read/write frequency ranges;
determining a quantity N of memory pages that need to be stored in the local memory, wherein the quantity N of the memory pages that need to be stored in the local memory is first N of memory pages arranged in descending order of priorities in the memories; and
determining a data read/write frequency of an N^{th} memory page as the first preset value.

5. The method according to claim 3 or 4, wherein the determining a quantity N of memory pages that need to be stored in the local memory comprises:
separately determining quantities of memory pages whose data read/write frequencies are greater than a second preset value in the local memory and the remote memory;
determining a proportion of the quantity of the memory pages whose data read/write frequencies are greater than the second preset value in the local memory to a quantity of memory pages whose data read/write frequencies are greater than the second preset value in the memories; and
multiplying the proportion by a total quantity of used memory pages in the memories, to obtain the quantity N of the memory pages that need to be stored in the local memory.

6. The method according to any one of claims 1 to 5, wherein both the local memory and the remote memory are dynamic random access memories DRAMs.

7. The method according to any one of claims 1 to 5, wherein the local memory is a DRAM, and the remote memory is a non-DRAM storage.

8. A memory setting apparatus, wherein the apparatus is configured to set at least two memories comprised in a processor in a NUMA system, and the apparatus comprises:
an obtaining module, configured to obtain performance of the at least two memories when the processor is started; and
a setting module, configured to set, based on the performance of the at least two memories, at least one of the at least two memories as a local memory, and at least one of the at least two memories as a remote memory, wherein performance of the local memory is better than performance of the remote memory.

9. The apparatus according to claim 8, wherein the apparatus further comprises a migration module, wherein the migration module is configured to migrate data in the remote memory whose data read/write frequency is not lower than a first preset value to the local memory.

10. The apparatus according to claim 9, wherein the apparatus further comprises a determining module, wherein the determining module is configured to: determine a quantity N of memory pages that need to be stored in the local memory, wherein the quantity N of the memory pages that need to be stored in the local memory is first N of memory pages arranged in descending order of data read/write frequencies in the memories; and determine a data read/write frequency of an N^{th} memory page as the first preset value.

11. The apparatus according to claim 9, wherein the determining module is further configured to:
divide priorities for memory pages in the memories based on the data read/write frequencies of the memory pages in the memories, wherein each priority corresponds to a data read/write frequency range, and different priorities correspond to different data read/write frequency ranges;
determine a quantity N of memory pages that need to be stored in the local memory, wherein the quantity N of the memory pages that need to be stored in the local memory is first N of memory pages arranged in descending order of priorities in the memories; and
determine a data read/write frequency of an N^{th} memory page as the first preset value.

12. The apparatus according to claim 10 or 11, wherein when determining the quantity N of the memory pages that need to be stored in the local memory, the determining module is specifically configured to:
separately determine quantities of memory pages whose data read/write frequencies are greater than a second preset value in the local memory and the remote memory;
determine a proportion of the quantity of the memory pages whose data read/write frequencies are greater than the second preset value in the local memory to a quantity of memory pages whose data read/write frequencies are greater than the second preset value in the memories; and
multiply the proportion by a total quantity of used memory pages in the memories, to obtain the quantity N of the memory pages that need to be stored in the local memory.

13. The apparatus according to any one of claims 8 to 12, wherein both the local memory and the remote memory are dynamic random access memories DRAMs.

14. The apparatus according to any one of claims 8 to 12, wherein the local memory is a DRAM, and the remote memory is a non-DRAM storage.
